# EUROPÄISCHE PATENTSCHRIFT

(11) **EP 1 016 204 B1**
(45) Veröffentlichungstag und Bekanntmachung des Hinweises auf die Patenterteilung: **27.12.2006**
(21) Anmeldenummer: 99932883.4
(22) Anmeldetag: 14.07.1999
(51) Int. Cl.: H02M 5/293, G05F 1/14

(54) **SCHALTUNGSVORRICHTUNG ZUR ANNÄHERND SINUSFÖRMIGEN ABSENKUNG EINER WECHSELSPANNUNG**
CIRCUIT DEVICE FOR APPROXIMATELY-SINUSOIDAL LOWERING OF AN AC VOLTAGE
CIRCUIT DESTINE A L'ABAISSEMENT PRESQUE SINUSOIDAL D'UNE TENSION ALTERNATIVE

(30) Priorität: 14.07.1998 DE 19831603
(43) Veröffentlichungstag der Anmeldung: 05.07.2000
(73) Patentinhaber: Hanke, Werner, 5431 Kuchl (AT)
(72) Erfinder: Hanke, Werner, 5431 Kuchl (AT)
(74) Vertreter: Fleuchaus, Leo
(86) Internationale Anmeldenummer: PCT/EP1999/004978
(87) Internationale Veröffentlichungsnummer: WO 2000/004628

(56) Entgegenhaltungen:
- EP-A- 0 746 184
- EP-A- 0 849 655
- WO-A-96/24146
- DE-C- 4 337 956
- US-A- 3 944 909
- US-A- 4 745 352
- US-A- 4 791 348

## Beschreibung

Die Erfindung betrifft eine Schaltungsvorrichtung zur annähernd sinusförmigen Absenkung einer Wechselspannung, bestehend aus einem Spartransformator mit zumindest einem Abgriff.

Bei der Ansteuerung von Leuchtstoffröhrenanlagen bzw. Hochdruckgasröhren ist es wünschenswert, den nach dem Phasenwechsel einsetzenden Elektronenfluß bzw. Ionenfluß mit möglichst hoher Spannung auszulösen, wobei für die Aufrechterhaltung dieses Elektronenflusses bzw. Ionenflusses für den Rest der Phase nur noch eine geringere Spannung notwendig ist, d. h. die Lampen benötigen einen höheren Einschaltstrom als Betriebsstrom. Wenn von einer Netzspannung von 220 V als Einschaltstrom ausgegangen wird, so kann der Betriebsstrom bei wesentlich niedrigeren Spannungen aufrechterhalten werden, wobei die Höhe des Betriebsstromes von anderen Schaltkomponenten und insbesondere des Transformators abhängt, so daß eine Spannungsabsenkung in der Größenordnung von etwa 2/5 bis 1/3 der Ausgangsspannung im Bereich zweckmäßiger Größen liegt.

Es ist wohl bekannt, für derartige Steuerungen einen Spartransformator mit vielen Abgriffen zu benutzen wobei eine komplizierte Abgriffstruktur benötigt wird, um zum Beispiel mit Hilfe von Schaltschützen einen relativ engen Spannungsbereich zu steuern. Bei einer derartigen Lösung entstehen oberwellenreiche Spannungsspitzen, die für die benutzten Leuchtmittel sehr nachteilig sind.

In das Dokument US 4745352 von dem Stand der Technik wird eine Umwandlerschaltung vorgeschlagen.

Der Erfindung liegt die Aufgabe zugrunde, eine Schaltungsvorrichtun zu schaffen, mit der es möglich ist, insbesondere bei Leuchtstoffröhrenanlagen bzw. Hochdruckgasröhren von einem höheren Einschaltstrom auf einen niederen Betriebsstrom in jeder Halbphase einer Wechselspannung umzuschalten, wobei es möglich sein soll, einen derartige Schaltvorrichtung auch für Altanlagen zu benutzen, ohne daß die kapazitive Kompensation des induktiven Blindstromanteils derartiger Anlagen außer Betrieb genommen werden muß und gleichzeitig eine Stromersparnis erzielt wird.

Diese Aufgabe wird ausgehend von der eingangs genannten Schaltvorrichtung erfindungsgemäß dadurch gelöst, daß der Fußpunkt des Spartransformators über einen ersten Schalter am Nulleiter liegt, daß die Wicklung oder ein Teil der Wicklung des Spartransformators über einen zweiten Schalter kurzschließbar ist und daß die beiden Schalter mit der Frequenz der Wechselspannung wechselweise ohne Überschneidung ein- und ausschaltbar sind.

Die beiden Schalter sind als elektronische Schalter aufgebaut, wobei der erste elektronische Schalter eine als Phasenanschnitts- und/oder Phasenabschnittsteuerung arbeitende Transistorschaltung ist. Eine derartige Transistorschaltung wurde bereits für einen Dimmer vorgeschlagen (DE-OS 197 31 700).

Der zweite elektronische Schalter besteht erfindungsgemäß aus zwei wechselweise in Abhängigkeit von der Phase wirksamen Diodenschaltern.

Diese Diodenschalter sind wahlweise synchron von der Wechselspannung ansteuerbar, wobei der erste Diodenschalter bei der positiven Phase und der zweite Diodenschalter bei der negativen Phase der Wechselspannung leitend wird, wenn der erste elektronische Schalter nichtleitend ist.

Jeder der Diodenschalter umfaßt erfindungsgemäß einen in Serie zu einer Diode liegenden FET oder IGBT, wobei der FET oder IGBT von der Sekundärspannung eines Transformators ansteuerbar ist, dessen Phasenlage mit der Phasenlage der Wechselspannung übereinstimmt. Zur phasenmäßigen Anpassung der Transformatoren ist vorgesehen, daß die Primärwicklung eines jeden Transformators mit einer parallelliegenden Kapazität derart abstimmbar ist, daß die Phasenverschiebung gegenüber der Wechselspannung am Transformator auf Null abgleichbar ist.

Die Vorteile und Merkmale der Erfindung ergeben sich auch aus der nachfolgenden Beschreibung von Ausführungsbeispielen in Verbindung mit den Ansprüchen und der Zeichnung. Es zeigen:
- Fig. 1A - 1B: Prinzipschaltbilder der erfindungsgemäßen Schaltvorrichtung;
- Fig. 2A - 2C: Diagramme für die als Phasenanschnitts- und/oder Phasenabschnittsteuerung arbeitenden Transistorschaltung für den ersten elektronischen Schalter;
- Fig. 3: ein detailliertes Schaltbild der erfindungsgemäßen Schaltvorrichtung.

In der nachfolgenden Beschreibung sind für gleiche Teile gleiche Bezugszeichen verwendet.

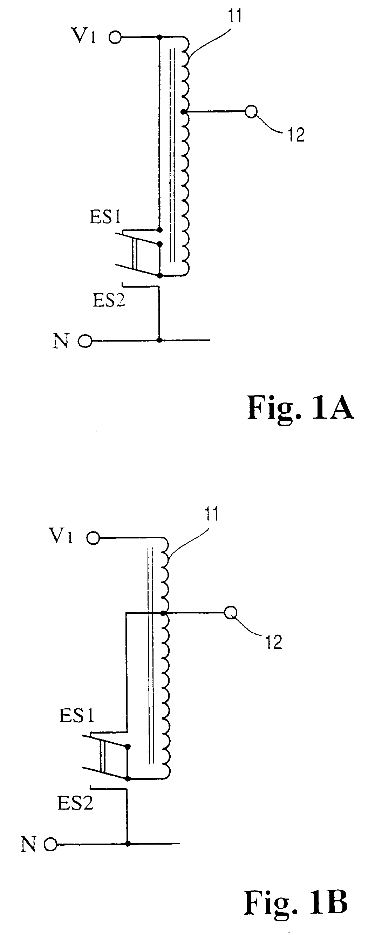

Die in Fig. 1A dargestellte Prinzipschaltung besteht aus einem Spartransformator 11, dessen oberes Wicklungsende an die Phasenspannung V1 und dessen unteres Wicklungsende über einen elektronischen Schalter ES2 an den Nulleiter N angeschlossen ist. Das obere und untere Wicklungsende des Spartransformators 11 ist ferner derart an einen elektronischen Schalter ES1 angeschlossen, daß die Wicklung bei geschlossenem Schalter ES1 kurzgeschlossen ist.

Die beiden elektronischen Schalter ES1 und ES2 sind miteinander derart verkoppelt bzw. synchronisiert, daß sie eine Wechselschalterfunktion haben. Dabei ist es wichtig, daß die Umkehr der Schaltfunktion derart gewährleistet sein muß, daß ein Kurzschluß zwischen Phase und Nulleiter vermieden wird. d. h. wenn der elektronische Schalter ES1 geschlossen wird, muß der elektronische Schalter ES2 geöffnet sein.

Unter dieser Voraussetzung ergibt sich, daß bei geschlossenem Schalter ES1 und geöffnetem Schalter ES2 am Abgriff 12 des Spartransformators 11 die Phasenspannung V1 anliegt, vermindert um den Spannungsabfall an dem ohmschen Widerstand der parallelgeschalteten Wicklungsabschnitte. Der elektrische Kurzschluß wirkt sich auch als magnetischer Kurzschluß aus, so daß in den Wicklungsabschnitten keine Induktionsspannung aufgebaut wird.

Bei geöffnetem Schalter ES1 und geschlossenem Schalter ES2 kommt die volle Wirkung des Spartransformators zur Geltung, so daß am Abgriff 12 die dem Windungsverhältnis der beiden Windungsabschnitte entsprechende Spannung anliegt.

Auch bei der Schaltungsanordnung gemäß Fig. 1B ergeben sich dieselben Verhältnisse, obwohl mit dem Schalter ES1 nur der Wicklungsabschnitt zwischen dem Abgriff 12 und dem unteren Wicklungsende kurzgeschlossen werden kann. Auch in diesem Fall ergibt sich im Spartransformator ein magnetischer Kurzschluß, so daß am Abgriff lediglich die Spannung wirksam ist, die sich aus der Phasenspannung vermindert um den Spannungsabfall am ohmschen Widerstand des oberen Wicklungsabschnitts ergibt.

Für beide Versionen gemäß den Fig. 1A und 1B stellt sich am Abgriff 12 im wesentlichen die Phasenspannung ein, da der ohmsche Widerstand der Wicklungsabschnitte in der Regel sehr gering ist.

Bei geöffnetem Schalter ES1 und geschlossenem ES2 dagegen stellt sich am Abgriff 12 die dem Wicklungsverhältnis entsprechende reduzierte Spannung ein, die sich aufgrund der elektromagnetischen Wirkung der Spartransformators 11 ergibt.

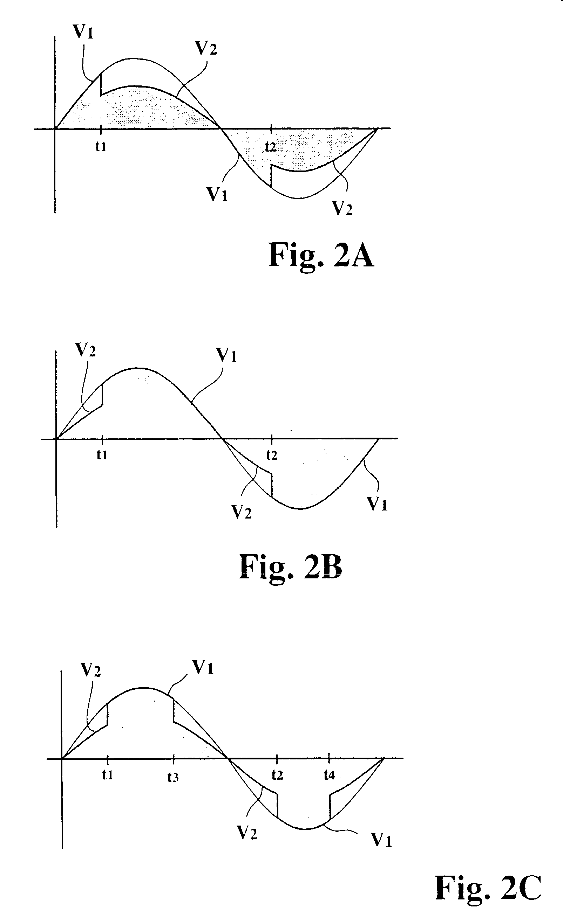

Aufgrund der vorausstehend erläuterten Wirkungsweise der Prinzipschaltung läßt sich bei synchronisiertem Umschalten der beiden elektronischen Schalter ES1 und ES2 mit der Frequenz der Wechselspannung am Abgriff 12 ein Spannungsverlauf erzielen, wie er sich aus den Darstellungen gemäß Fig. 2A -2C ergibt. Wenn beim Beginn der positiven Halbwelle einer Wechselspannung der Schalter ES1 geschlossen und der Schalter ES2 geöffnet ist, steigt die Spannung am Abgriff 12 entsprechend der Phasenspannung V1 an bis zu dem Zeitpunkt t1, zu welchem der Wechselschalter umgelegt wird d.h. der Schalter ES1 geöffnet und der Schalter ES2 geschlossen wird. Zu diesem Zeitpunkt fällt die Phasenspannung auf die induzierte Ausgangsspannung V2 am Abgriff 12 ab, so daß sich der Spannungsverlauf gemäß Fig. 2A bis zum Ende der Halbphase ergibt. Wenn zu dem Zeitpunkt des Nulldurchgangs der Wechselspannung erneut der Schalter ES1 geschlossen und der Schalter ES2 geöffnet wird, stellt sich wieder ein Spannungsverlauf gemäß der Phasenspannung V2 bis zu dem Zeitpunkt ein, in dem die Umschaltung der beiden Schalter ES1 und ES2 erfolgt. Dies ist in Fig. 2A für die negative Halbwelle der Phasenspannung V1 dargestellt, wobei wiederum zunächst die Phasenspannung V1 bis zum Zeitpunkt t2 am Abgriff 12 anliegt und nach der Umschaltung die Spannung auf den Wert V2 zurückgeht.

Ein entsprechender Verlauf ergibt sich auch für die Prinzipschaltung gemäß Fig. 1B.

Bereits aus der prinzipiellen Darstellung der Schaltung und deren Wirkungsweise läßt sich erkennen, daß sich durch die wechselweise Umschaltung mit der Frequenz der Wechselspannung am Abgriff 12 ein Spannungsverlauf einstellt, der im Vergleich zu einer Phasenabschnittsteuerung erheblich geringere Spannungsspitzen bzw. Oberwellen aufweist, da in dem Abschnitt vom Zeitpunkt t1 bzw. t2 bis zum darauffolgenden Nulldurchgang der Wechselspannung eine Spannung wirksam ist, die einer reduzierten Wechselspannung entspricht.

Die Schaltungsanordnung gemäß der Erfindung kann jedoch auch mit einem anderen Steuerungsverlauf betrieben werden, der in Fig. 2B erläutert ist. Dieser Spannungsverlauf läßt sich dadurch erreichen, daß zum Zeitpunkt des Nulldurchgangs der Wechselspannung der Schalter ES2 geschlossen und der Schalter ES1 geöffnet ist. Wenn diese Schalter wechselweise geschlossen bzw. geöffnet werden, geht die Spannung am Abgriff 12 des Spartransformators 11 von der niederen Wechselspannung V2 in die höhere Phasenspannung V1 über, wie dies in der Darstellung gezeigt ist. Auch in diesem Fall ergibt sich eine Ausgangsspannung, die wesentlich weniger störbelastet ist als eine mit einer Thyristorschaltung verwirklichten Phasenanschnittsteuerung, welche zu den Zeitpunkten t1 und t2 die volle Phasenspannung V1 einschaltet.

Mit der Schaltungsanordnung gemäß der Erfindung läßt sich auch am Abgriff 12 ein Spannungsverlauf verwirklichen, wie er in Fig. 2C dargestellt ist. In diesem Fall ist vom Phasennulldurchgang bis zu den Zeitpunkten t1 bzw. t2 der Schalter ES2 geschlossen und der Schalter ES1 offen. Ein wechselweises Umlegen der beiden Schalter zu diesem Zeitpunkt bewirkt, daß am Abgriff 12 nunmehr praktisch die volle Phasenspannung V1 anliegt und zwar bis zum Zeitpunkt t3 bzw. t4, zu welchen die beiden Schalter wechselweise erneut betätigt werden. Der sich dadurch einstellende Spannungsverlauf gemäß Fig. 2C ist oberwellenarm und daher für Anwendungen, die wenig der Wechselstromfrequenz überlagerte Störfrequenzen haben dürfen, besonders vorteilhaft.

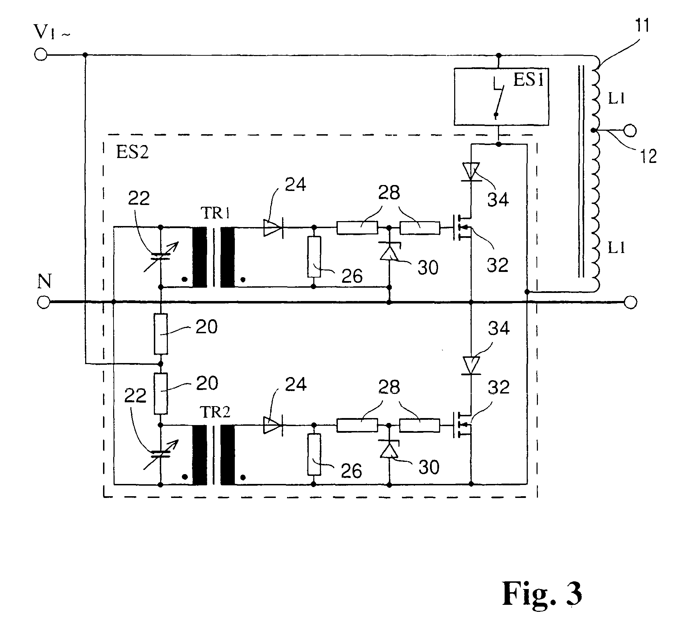

In Fig. 3 ist eine Schaltungsanordnung gemäß der Erfindung dargestellt, die der Prinzipschaltanordnung gemäß Fig. 1A in detaillierter Ausführung entspricht. Dabei wird für den elektronischen Schalter ES1 eine bereits vorgeschlagene Dimmerschaltung für Lichtregelanlagen verwendet, in der eine Phasenabschnittsteuerung verwirklicht ist. Eine solche Schaltung ist in der deutschen Patentanmeldung 197 31 700.6 beschrieben. Für die Funktionsweise der erfindungsgemäßen Schaltvorrichtung ist jedoch auch jede andere Schaltung verwendbar, mit der eine Phasenabschnitt- oder Phasenanschnittsteuerung möglich ist.

Eine solche Schaltung arbeitet dann entsprechend dem Spannungsverlauf gemäß den Fig. 2A bis Fig. 2C.

Die detaillierte erfindungsgemäße Schaltungsanordnung umfaßt den Spartransformator 11 mit einem Abgriff 12, der mit seinem oberen Wicklungsabschnitt L1 an der Phasenspannung V1 liegt und dessen unterer Wicklungsabschnitt L2 am unteren Ende an den elektronischen Schalter ES2 angeschlossen ist, welcher durch die in den gestrichelt angedeuteten Block dargestellte Schaltung verwirklicht wird. Insoweit entspricht die Ausführungsform der Schaltungsanordnung gemäß Fig. 1A.

Zur Verwirklichung des elektronischen Schalters ES2 werden zwei gleichartig aufgebaute Diodenschalter benutzt, von denen der eine in der Darstellung gemäß Fig. 3 unterhalb des Nulleiters N und der andere oberhalb des Nulleiters N gezeigt ist. Dabei ist der oberhalb des Nulleiters dargestellte Diodenschalter der negativen Halbwelle und der unterhalb des Nulleiters dargestellte Diodenschalter der positiven Halbwelle zugeordnet.

Da beide Diodenschalter gleichartig aufgebaut sind, wird nur einer der beiden detailliert beschrieben.

Der Diodenschalter besteht aus einem Transformator TR1 bzw. TR2, dessen Primärseite hochohmig an die Wechselspannung zwischen der Phasenleitung und dem Nulleiter angeschlossen ist. Parallel zur Primärwicklung ist eine abstimmbare Kapazität 22 angeordnet, die zusammen mit der Primärwicklung des Transformators TR einen Schwingkreis bildet, mit dem sich die üblicherweise bei kleinen Transformatoren voreilende Phase auf den Phasennulldurchgang der Wechselspannung auf Null einstellen läßt. Die Primär- und Sekundärwicklung der Transformatoren TR sind gleichsinnig gewickelt. Sekundärseitig ist an den Transformator eine Diode 24 in Serie zu einem Widerstand 26 angeschlossen, wobei die Diode mit ihrer Anode an der Sekundärwicklung des Transformators liegt. Die Kathode der Diode wird über einen Widerstand 28 an das Gate eines FET bzw. IGBT angelegt, wobei ein Abgriff dieses Widerstandes über eine Zenerdiode 30 an der positiven Seite der Sekundärwicklung liegt. Mit dieser Zenerdiode wird die Gatespannung begrenzt.

Zwischen der positiven Seite der Sekundärwicklung des Transformators TR2 und dem Nulleiter liegt in Serie ein FET bzw. ein IGBT 32 und eine Diode 34, die anodenseitig am Nulleiter angeschlossen ist. Die positive Seite der Sekundärwicklung des Transformators TR2 liegt ferner am Fußpunkt des Spartransformators 11.

Für den oberen Diodenschalter sind wegen der Ansteuerung durch die negative Phase der Wechselspannung der FET bzw. IGBT 32 und die Diode 34 in umgekehrter Reihenfolge zwischen den Nullleiter und den Fußpunkt des Spartransformators geschaltet.

Für die Funktionsweise der erfindungsgemäßen Schaltungsanordnung wird von der Funktionsweise der Prinzipschaltung gemäß Fig. 1A ausgegangen und anschließend die Funktionsweise des elektronischen Schalters ES2 aus den beiden Diodenschaltern für die positive und die negative Halbphase der Wechselspannung beschrieben. Zu diesem Zweck sind die beiden Transformatoren TR1 und TR2 umgekehrt gepolt an die Wechselspannung angeschlossen. Der hochohmige Widerstand 20 zusammen mit der Kapazität 22 an der Primärseite des Transformators ermöglicht die Phasenlage der Sekundärspannung an die der Netzspannung anzupassen, da dieses Netzwerk in Verbindung mit den Trafowicklungen einen Parallelschwingkreis bildet. Dies ist, wie bereits erwähnt, notwendig, um der Phasenverschiebung der Trafos entgegenzuwirken.

Unter der Annahme, daß eine positive Halbwelle der Wechselspannung anliegt und der elektronische Schalter ES1 geöffnet ist, hat der oberhalb des Nulleiters N liegende Diodenschalter keine Wirkung, da die negative, über den Transformator TR1 wirkende Spannung an der Anode der Diode 24 liegt, d. h. die Diode 24 sperrt. Somit fließt auch kein Strom über den dem oberen Diodenschalter zugehörigen FET bzw. IGBT. Unter denselben Voraussetzungen ist jedoch die Sekundärspannung am Transformator TR2 derart gepolt, daß die Diode 24 dieses Diodenschalters leitend wird und sich an der Zenerdiode 30 über den Teilwiderstand 28 eine Spannung vorgegebener Maximalgröße aufbaut. Diese Spannung wird über den zweiten Teil des Widerstands 28 an das Gate des FET bzw. IGBT 32 angelegt, wodurch dieser leitend wird. Da sich im offenen Zustand des elektronischen Schalters ES1 und bei einem über die obere Wicklungshälfte L1 des Spartransformators 11 und den Abgriff 12 über Last fließenden Stromes infolge der magnetischen Induktion im Transformatorkern auch eine Spannung an der unteren Teilwicklung L2 einstellt, ergibt sich am unteren Ende der Teilwicklung L2 ein gegenüber dem Nulleiter negativer Spannungswert, d. h. an der Kathode der Diode 34 des Diodenschalters liegt eine negative Spannung über den leitenden FET bzw. IGBT 32. Damit ergibt sich ein Stromfluß vom Nulleiter über die Diode 34 und den FET bzw. IGBT 32 zum unteren Ende der Wicklung L2, womit diese Wicklung L2 als Spannungsquelle für die am Abgriff 12 liegende Last dient.

Wenn sich beim Nulldurchgang der Halbwelle der elektronische Schalter ES1 erneut schließt und über den Transformator TR2 des unteren Diodenschalters die negative Phase an der Diode 24 anliegt, sind der FET und der IGBT 32 sowie die Diode 34 nichtleitend, d. h. der untere Fußpunkt der Wicklung L2 ist gegenüber dem Nulleiter offen und an die Phasenspannung V1 angeschlossen.

Wenn nun während der negativen Halbwelle der Wechselspannung der elektronische Schalter ES1 erneut geöffnet wird, wird über den Transformator TR1 eine positive Spannung an die Diode 24 angelegt und diese leitend gemacht, so daß damit auch der FET bzw. IGBT des oberen Diodenschalters und die dazugehörige Diode 34 leitend wird. Damit steht am Abgriff 12 die durch das Wicklungsverhältnis des Spartransformators 11 gegebene Spannung für die Last zur Verfügung.

Da für den elektronischen Schalter ES1 eine Schaltung für eine Phasenanschnitts- und/oder Phasenabschnittsteuerung Verwendung findet, können durch eine entsprechende Steuerung dieses elektronischen Schalters ES1 die unterschiedlichsten, annähernd sinusförmigen Spannungsabsenkungen erzielt werden, da mit Hilfe dieser Schaltung die Zeitpunkte t1 bis t4 gemäß den Fig. 2A bis 2C beliebig innerhalb einer Wechselspannungsperiode beliebig verstellbar sind.

Derselbe Funktionsablauf für die Diodenschalter ergibt sich auch für die Schaltungsanordnung nach dem Prinzipschaltbild gemäß Fig. 1B.

Aus dem Vorstehenden ergibt sich, daß mit Hilfe der beiden elektronischen Schalter ES1 und ES2 die Ausgangsspannung am Abgriff 12 des Spartransformators 11 in weiten Bereichen zwischen einer minimalen und einer maximalen Spannung regeln läßt. Gleichzeitig ist auch bei einer Steuerung entsprechend Fig. 2C eine Pulsbreitenmodulation für die Wechselspannung möglich, indem ein Dimmer für den elektronischen Schalter ES1 Verwendung findet, mit dem sowohl eine Phasenanschnitts- als auch eine Phasenabschnittsteuerung möglich ist. Es ist erforderlich, daß der elektronische Schalter ES2 gegensinnig mit dem elektronischen Schalter ES1 mitschaltet und selbständig erkennt, wann er öffnen und schließen muß. Dies ist durch die Ausführungsform der Diodenschalter gegeben.

Wenn am Abgriff 12 eine Spannungsmessung vorgesehen ist, kann mit Hilfe dieser Spannungsmessung die Ausgangsspannung in bekannterweise geregelt werden, indem über eine Steuereinheit entsprechend auf die Steuerung des elektronischen Schalters ES1 Einfluß genommen wird.

Mit Hilfe der vorausstehend beschriebenen Schaltungsanordnung gemäß der Erfindung kann in einem weiten Bereich eine annähernd sinusförmige Absenkung einer Versorgungsspannung erreicht werden, wobei nur verhältnismäßig wenig Störfrequenzen bzw. Oberwellen auftreten. Die Schaltungsanordnung ist nicht nur für den eingangs erwähnten Anwendungsfall geeignet, sondern auch für Anwendungsfälle, in denen grundsätzlich eine Absenkung der Versorgungsspannung für die Steuerung von Geräten benötigt wird. Dabei kann auch abweichend von der beschriebenen Ausführungsform die Umschaltung der beiden elektronischen Schalter ES1 und ES2 mit einem Vielfachen der Frequenz der Wechselspannung erfolgen.

Anstelle des erwähnten Dimmers für den elektronischen Schalter ES1 können auch andere Schaltungsanordnungen Verwendungen finden, mit denen synchron zur Wechselspannung das Puls-Pausen-Verhältnis mit einer Grundfrequenz von 100 Hz veränderbar ist. Der vorausstehend erwähnte Dimmer für den elektronischen Schalter ES1 bzw. ein entsprechend aufgebauter elektronischer Schalter, welcher symmetrisch zum Maximum einer jeden Halbwelle schaltet, ist als optimale Schaltanordnung zur Minimierung von Störspannungen anzusehen.

## Patentansprüche

1. Schaltungsvorrichtung zur annähernd sinusförmigen Absenkung einer Wechselspannung, bestehend aus einem Spartransformator mit zumindest einem Abgriff, wobei die Wicklung oder ein Teil der Wicklung des Spartransformators(11) über einen ersten elektronischen Schalter (ES1) magnetisch kurzschließbar ist und der Fußpunkt des Spartransformators (11) über einen zweiten elektronischen Schalter (ES2) am Nulleiter (N) liegt und ferner die beiden Schalter (ES1, ES2) mit der Frequenz der Wechselspannung wechselweise ein- und ausschaltbar sind,
**dadurch gekennzeichnet,**
**daß** der erste elektronische Schalter (ES1) eine als Phasenanschnitts- und/oder Phasenabschnittsteuerung arbeitende Transistorschaltung ist,
**daß** der zweite elektronische Schalter (ES2) aus zwei wechselweise in Abhängigkeit von der Phase wirksamen Diodenschaltern besteht, die an gleichsinnig gewickelten Transformatoren (TR1,TR2) sekundärseitig angeschlossen sind,
und **daß** die Diodenschalter über die Transformatoren (TR1,TR2) primärseitig phasensynchron von der Wechselspannung (V1) ansteuerbar sind, wobei der erste Diodenschalter bei der positiven Phase und der zweite Diodenschalter bei der negativen Phase der Wechselspannung leitend wird, wenn der erste elektronische Schalter (ES1) nichtleitend ist.

2. Schaltungsanordnung nach Anspruch 1,
**dadurch gekennzeichnet,**
**daß** jeder Diodenschalter einen in Serie zu einer Diode (34) liegenden FET oder IGBT (32) umfaßt,
**daß** jeder FET oder IGBT von der Sekundärspannung je eines Transformators (TR) ansteuerbar ist.

3. Schaltungsanordnung nach Anspruch 1 oder 2,
**dadurch gekennzeichnet,**
**daß** die Primärwicklung eines jeden Transformators (TR) mit einer parallelliegenden Kapazität (22) derart abstimmbar ist, daß die Phasenverschiebung gegenüber der Wechselspannung am Transformator (TR) auf Null abgleichbar ist.

## Claims

1. A circuit device for approximately sinusoidal reduction of an alternating voltage, comprising an autotransformer having at least one tap, whereby the winding or part of the winding of the autotransformer (11) can be magnetically short-circuited via a first electronic switch (ES1) and the base point of the autotransformer (11) is connected via a second electronic switch (ES2) to the neutral (N) and furthermore both switches (ES1, ES2) can be alternatingly turned ON/OFF at the frequency of the alternating voltage,
**characterized in that**
said first electronic switch (ES1) is a transistor circuit working as a leading/trailing phase angle control,
said second electronic switch (ES2) consists of two alternatingly phase-activated diode switches connected to the secondary side of transformers (TR1, TR2) having undirectional windings, and that
said diode switches can be activated via said transformers (TR1, TR2) at the primary side phase-synchronized by the alternating voltage (V1), said first/second diode switch being ON in the positive/negative phase respectively of the alternating voltage when said first electronic switch (ES1) is OFF.

2. The circuit assembly as set forth in claim 1,
**characterized in that**
each diode switch comprises an FET or IGBT (32),
each FET or IGBT can be activated by the secondary voltage of one transformer (TR) each.

3. The circuit assembly as set forth in claim 1 or 2,
**characterized in that**
the primary winding of each transforrmer (TR) can be tweaked with a parallel-circuited capacitor (22) such that the shift in phase as compared to the alternating voltage at transformer (TR) can be offset to zero.

## Revendications

1. Un appareil de commutation pour approximativement, une diminution sinusoidale d'une tension alternative comprenant un autotransformateur avec au moins une prise, où l'enroulement ou une partie de l'enroulement de l'autotransformateur (11) peut être court-circuité de manière magnétique via un premier commutateur électronique (ES1) et le pied de l'autotransformateur (11) est connecté au conducteur neutre (N) via un second commutateur électronique (ES2) et en outre, les deux commutateurs (ES1, ES2) peuvent alternativement être mis en/hors circuit au niveau de la fréquence de la tension alternative,
**caractérisé en ce que**,
ledit premier commutateur électronique (ES1) est un commutateur de transistor travaillant comme un réglage de phase en tête / queue,
ledit second commutateur électronique (ES2) comprend deux commutateurs à diode alternativement actifs dépendamment de la phase, qui sont connectés au niveau du côté secondaire des transformateurs (TR1, TR2) ayant des enroulement de même sens,
les commutateurs à diode sont activables via lesdits transformateurs (TR1, TR2) au niveau du côté primaire synchrone de phase depuis la tension alternative (V1), où ledit premier commutateur à diode devient conducteur lors de la phase positive et le second commutateur à diode lors de la phase négative de la tension alternative, quand ledit premier commutateur électronique (ES1) est non-conducteur.

2. Dispositif de commutation selon la revendication 1,
**caractérisé en ce que**,
chaque commutateur à diode comprend un FET ou IGBT (32) en série,
chaque FET ou IGBT peut être activé depuis la tension secondaire d'un transformateur (TR) chacun.

3. Dispositif de commutation selon la revendication 1 ou 2,
**caractérisé en ce que**,
l'enroulement primaire de tout un transformateur (TR) peut s'accorder avec une capacité (22) étant parallèle de telle sorte que le déphasage par rapport à la tension alternative au niveau du transformateur (TR) peut être équilibré à zéro.
